# EUROPEAN PATENT APPLICATION

(11) **EP 4 636 749 A1**
(43) Date of publication of application: **22.10.2025**
(21) Application number: 25163159.4
(22) Date of filing: 12.03.2025
(51) Int. Cl.: G09G 3/36

(54) **DISPLAY CONTROL METHOD AND DISPLAY CONTROL APPARATUS**

(30) Priority: 17.04.2024 KR 20240051333
(71) Applicant: Hyundai Mobis Co., Ltd., Gangnam-gu Seoul 06141 (KR)
(72) Inventor: IM, Sang Eon, 16891 Yongin-si, Gyeonggi-do (KR)
(74) Representative: Jung, Minkyu

(57) **Abstract**

A display control apparatus includes a head unit configured to output an image signal and a control signal, and a display device configured to receive the image signal and the control signal and output the image signal. The head unit may include a direct current (DC) voltage generator configured to output at least two types of DC voltages, and the display device may include a circuit configured to generate an output signal based on a first input signal and a second input signal. A display control method includes outputting, by a head unit, an image signal and a control signal, outputting, by a DC voltage generator in the head unit, at least two types of DC voltages, receiving, by a display device, the image signal and the control signal and outputting the image signal, and generating, by the display device, an output signal based on a first input signal and a second input signal.

## Description

### CROSS-REFERENCE TO RELATED APPLICATIONS

This application claims the benefit of Korean Patent Application No. 10-2024-0051333 filed on April 17, 2024, which is hereby incorporated by reference as if fully set forth herein.

### TECHNICAL FIELD

Embodiments relate to a method and apparatus for controlling a display of a vehicle.

### BACKGROUND

In a conventional vehicular display system, the power of a vehicle is supplied only to a head unit of the vehicle, and a display device is supplied with power by the head unit. In this case, if there is a problem with a power supply of the head unit, power is not supplied to the display device, which causes the display device to fail to perform a display function. In other words, head unit failure causes dependent failure that causes the display device to not work.

As functional safety is required for the display device of the vehicle and the size of the display device increases, the architecture through which power is supplied by the head unit has unreasonable limitations.

### SUMMARY

Accordingly, the present disclosure provides a method and apparatus for optimizing a structure for safely and efficiently inputting power to a display device and a structure for controlling a display.

The present disclosure provides a method and apparatus for safely and efficiently performing power control by a head unit in the absence of a microcontroller unit (MCU) capable of controlling power within a display device.

The objects of the present disclosure are not limited only what has been described hereinabove and the scope of embodiments of the present disclosure may be extended to other objects that may be inferred by those skilled in the art based on the entire contents disclosed herein.

In accordance with an aspect of the present disclosure, a display control apparatus includes a head unit configured to output an image signal and a control signal, and a display device configured to receive the image signal and the control signal and output the image signal. The head unit may include a direct current (DC) voltage generator configured to output at least two types of DC voltages, and the display device may include a circuit configured to generate an output signal based on a first input signal and a second input signal.

In accordance with another aspect of the present disclosure, a display control method includes outputting, by a head unit, an image signal and a control signal, outputting, by a DC voltage generator in the head unit, at least two types of DC voltages, monitoring the DC voltages, receiving, by a display device, the image signal and the control signal and outputting the image signal, and generating, by the display device, an output signal based on a first input signal and a second input signal.

The method and apparatus according to embodiments prevent display malfunction upon occurrence of a problem in power supply within a head unit.

The method and apparatus according to embodiments safely control power of a display device while minimizing the complexity of a display system.

### BRIEF DESCRIPTION OF THE DRAWINGS

The drawings are included to provide a further understanding of embodiments and illustrate embodiments together with description related to embodiments. For a better understanding of various embodiments described below, reference should be made to the following detailed description which should be read in conjunction with the following figures wherein like numerals represent like parts. In the drawings:
FIG. 1 illustrates a head unit and a display device according to embodiments;
FIG. 2 illustrates the head unit and the display device according to embodiments;
FIG. 3 illustrates the head unit and the display device according to embodiments;
FIG. 4 illustrates the head unit and the display device according to embodiments;
FIG. 5 illustrates the head unit and the display device according to embodiments; and
FIG. 6 illustrates a display control method according to embodiments.

### DETAILED DESCRIPTION

Reference will now be made in detail to exemplary embodiments of the present disclosure with reference to the accompanying drawings. A detailed description, which will be given below with reference to the accompanying drawings, is intended to explain exemplary embodiments of the present disclosure, rather than to show only embodiments that may be implemented according to the disclosure. The following detailed description includes specific details in order to provide a thorough understanding of the present disclosure. However, it will be apparent to those skilled in the art that the present disclosure may be practiced without such specific details.

Although most terms used in embodiments have been selected from general ones widely used in the art, some terms have been arbitrarily selected by the applicant and their meanings are explained in detail in the following description as needed. Thus, embodiments should be understood based upon the intended meanings of the terms rather than their simple names or meanings.

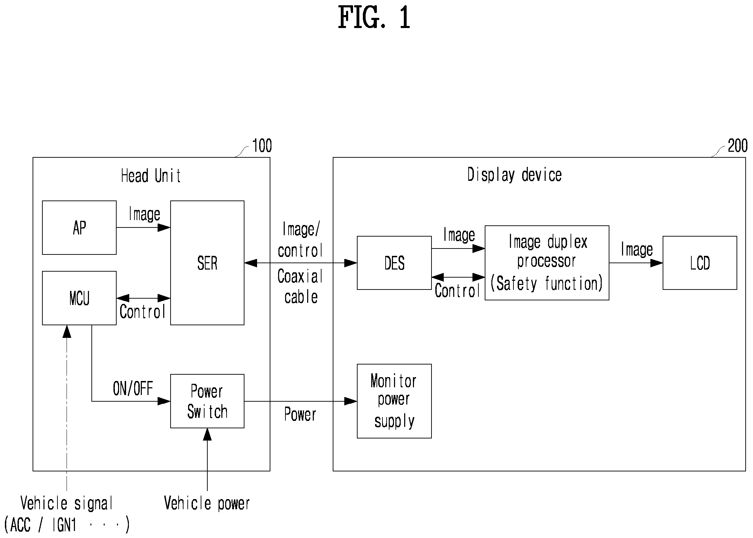

FIG. 1 illustrates a head unit and a display device according to embodiments.

The head unit and the display device according to embodiments relate to a method and system for connecting the display device to which functional safety is applied.

A vehicle or a display system of the vehicle includes a head unit 100 and/or a display device 200.

The head unit 100 may correspond to an image generating device.

The display device 200 may display an image.

The head unit 100 supplies power and/or an image signal to the display device 200.

The head unit 100 may include an application processor (AP), a microcontroller unit (MCU), a serializer (SER), and/or a power switch.

The AP generates an image signal.

The MCU generates a control signal. The MCU receives a vehicle signal such as ACC, IGN1, or the like from the vehicle. The MCU may transmit a control signal for power on/off to the power switch. That is, the head unit is powered on/off through the power switch and controls the operation of supplying power to the display device. Such a control operation may be processed by the MCU in the head unit in conjunction with the received vehicle signal ACC/IGN1.

The power switch provides power to the display device 200.

The SER integrates the image signal received from the AP and the control signal received from the MCU/AP and transmits the integrated image/control signal to the display device 200. Transmission of the image/control signal by the SER may be performed based on a coaxial cable. That is, communication of the image and control signals between the head unit 100 and the display device 200 is processed using dedicated integrated circuits (ICs) of the SER and a de-serializer (DES), and high-speed transmission may be performed due to the coaxial cable.

The display device 200 may include the DES, an image duplex processor, a liquid crystal display (LCD), and/or a monitor power supply.

The DES separates the image signal and the control signal from the signal including the image and control signals received from the SER. The DES transmits the image signal and the control signal to the image duplex processor.

The display device 200 controls the DES to receive the image signal and the control signal and transmit the image signal and the control signal to the image duplex processor. The display device 200 determines whether a signal received from the image duplexing processor is normal or not. If it is determined that the received signal is normal, this signal is bypassed so that the display device 200 causes the LCD to output an image. Conversely, if it is determined that the received signal is not normal, that is, if it is determined that there is an error in the signal, the display device 200 causes the LCD to output an image generated thereby.

The image duplex processor includes an image safety block and performs a function of outputting an image by duplexing an input image and an image of the image duplexing processor itself even if there is no input image.

Referring to FIG. 1, it may be seen that there is no separate MCU capable of performing power management for the display device 200 within the display device 200.

A power supply method between the head unit and the display device in FIG. 1 may have a problem of dependent failure in which the display device does not operate (black screen as a representative phenomenon) when the head unit fails and power is not supplied to the display device. Although the image duplex (safety) processor inside the display device has a function of detecting failure in which the image signal of the head unit is not input and outputting an image by itself, the image is incapable of being output when power is not supplied due to head unit failure.

When the display device malfunctions, since it is difficult to determine whether the display device malfunctions or the head unit malfunctions, there is a quality issue that requires analysis after replacing the display device and the head unit at the same time.

As the power consumption of the display device increases due to increase in the size and function of the display device, there may be a limitation to supplying power from the head unit to the display device.

In order to supply the increased power of the display device from the head unit, it is difficult to secure a current margin of a power semiconductor/passive component/connector/cable within the head unit. In addition, in order to secure an additional margin, costs increases excessively.

The problem may be overcome by adding a separate MCU that manages power within the display device. However, when the MCU is added, material costs increase and the difficulty of system development increases due to software development and functional safety analysis for the MCU.

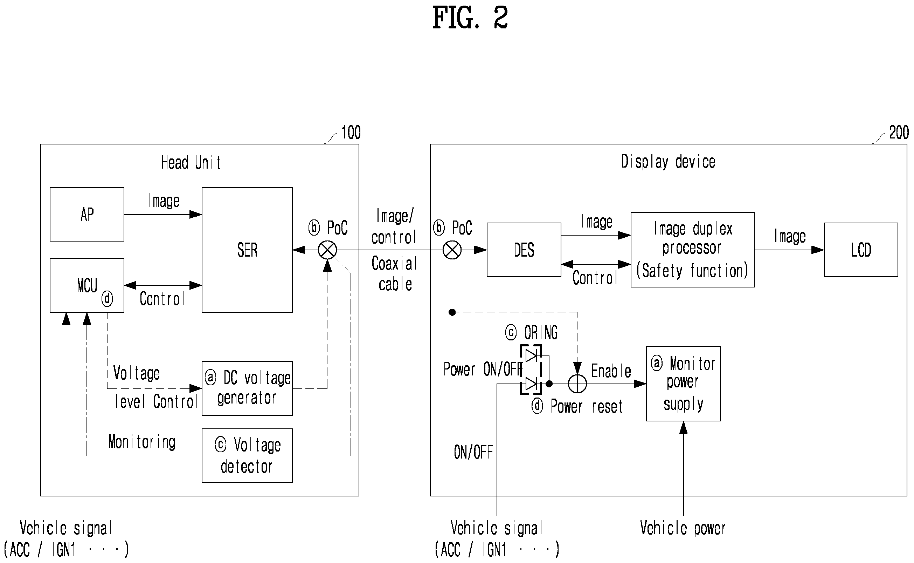

Hereinafter, a method for solving such technical problems will be described with reference to FIG. 2.

The display control method/apparatus according to embodiments may prevent display dependent failure caused by head unit failure by optimizing an interface between a large display device to which functional safety is applied and a head unit.

In addition, a system architecture that may effectively respond to an increase in power consumption due to an increase in the size of the display device may be provided.

Furthermore, the interface between the display device and the head unit may be simplified. The power control of the display device maybe directly controlled in hardware using an MCU of the head unit.

FIG. 2 illustrates the head unit and the display device according to embodiments.

FIG. 2 illustrates an additional structure of the head unit and the display device of FIG. 1.

The head unit 100 further includes a DC voltage generator, a power-on cable (PoC) circuit, a voltage detector, and an MCU (host) interface in addition to the head unit 100 of FIG. 1.

The DC voltage generator ⓐ may output at least two types of DC voltages.

The PoC circuit ⓑ is provided on a coaxial cable line through which a high-speed image signal may be transmitted.

The voltage detector ⓒ monitors whether the DC voltages are normally output.

The MCU (host) interface ⓓ controls and monitors the at least two types of DC voltages.

The display device 200 further includes a power input part, a PoC or filter circuit, an ORing circuit, and a power reset logic in addition to the display device 200 of FIG. 1.

The power input part ⓐ directly receives vehicle power input to the display device.

The PoC or filter circuit ⓑ separates the at least two types of DC voltages input through the input coaxial cable line.

The ORing circuit ⓒ performs ORing of a vehicle signal (ACC/IGN1...) and one DC voltage applied from the head unit to turn on/off the monitor power supply.

The power reset logic ⓓ performs a function that may forcibly turn off the display device even if the vehicle signal (ACC/IGN1...) is activated (ON).

In FIG. 1, the head unit 100 receives the vehicle power, and in FIG. 2, the display device 200, rather than the head unit 100, receives the vehicle power. In FIG. 1, the head unit 100 receives the vehicle signal, and in FIG. 2, the head unit 100 and the display device 200 of FIG. 2 receive the vehicle signal. In FIG. 1, the head unit 100 transmits the vehicle power to the display device through the power switch. In FIG. 2, the DC voltage generator transmits at least two types of DC voltages to the display device through a high-speed cable together with an image signal and a control signal under the monitoring of the voltage detector. The display device 200 of FIG. 2 separately receives the vehicle signal and may determine whether to turn on or off the power of the display device through the logic of the ORing circuit by using the received DC voltages and the received vehicle signal. When the vehicle signal indicates a power-on signal, the power of the display device is turned on. Even when the vehicle signal indicates a power-off signal, if the DC voltage received from the head unit indicates a power-on signal of the display device, the power of the display device is turned on. In addition, even when the DC voltage and/or the vehicle signal indicates a power-on signal of the display device, the power of the display device may be forcibly turned off by changing the DC voltage of the head unit, so that the display device may be safely reset.

Hereinbelow, the operation of each configuration will be described in detail.

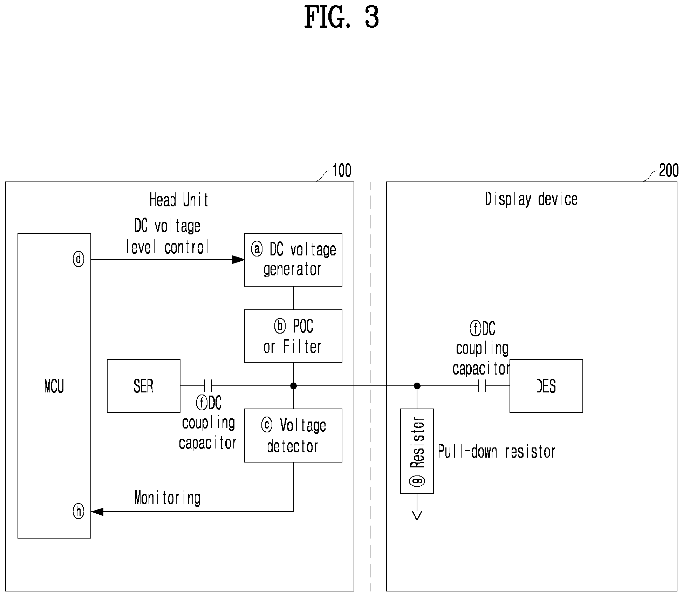

FIG. 3 illustrates the head unit and the display device according to embodiments.

FIG. 3 corresponds to the head unit and the display device of FIG. 2. The operation of the head unit 100 of FIGS. 2 and 3 is described below in detail with reference to FIG. 3.

A DC voltage generator ⓐ outputs at least two types of DC voltages. When outputting two types of voltages, the DC voltage generator ⓐ may output two output voltages in response to High and Low signals using a general purpose input/output (GPIO) port ⓓ. For example, when an MCU outputs a Low signal, the DC voltage generator outputs 5 V, and when the MCU outputs a High signal, the DC voltage generator outputs 12 V. When three or more types of voltages are output, the DC voltage generator is controlled by a plurality of GPIO ports or serial communication to output multiple voltages. In the case of two types of DC voltages, when the DC voltage is 5 V, the display device is turned on, and when the voltage is increased to output 12 V, the display power is reset to power-on.

A PoC circuit or filter circuit ⓑ is composed of a circuit that blocks a high-speed signal using passive components such as inductors/resistors/capacitors so as to prevent the high-speed signal from leaking to the DC voltage generator.

A voltage detector ⓒ monitors a DC voltage. The voltage output from the DC voltage generator ⓐ is biased to a certain voltage by a resistor ⓖ of the display device. In this case, the voltage detector ⓒ performs a monitoring function by converting the voltage into a voltage that is recognizable by the MCU. The monitoring voltage is usually detected as the highest voltage when the display device is not connected (open), as an intermediate voltage during a normal operation of the display device, and as a low voltage when a coaxial cable is shorted to a ground. An ADC port ⓗ of the MCU is used to monitor the detected voltage.

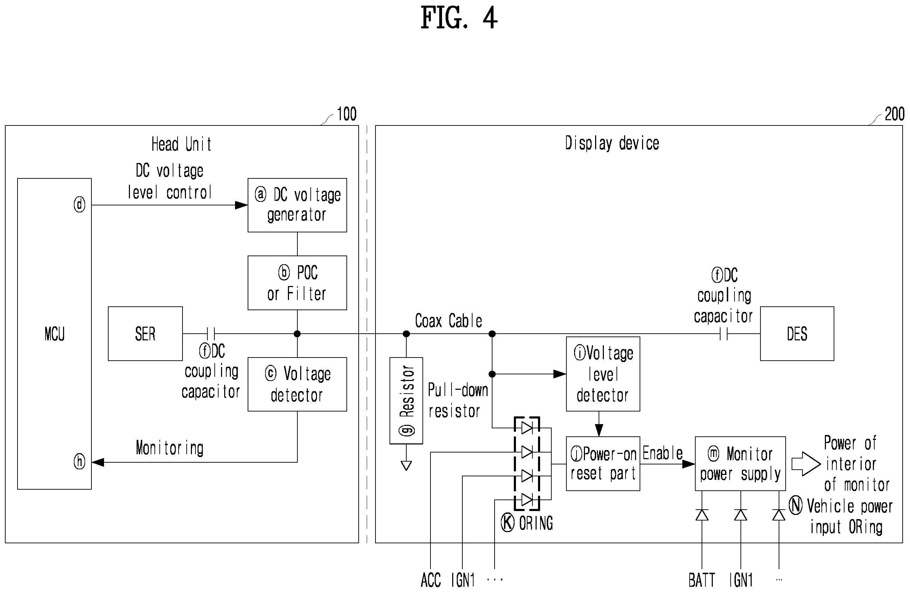

FIG. 4 illustrates the head unit and the display device according to embodiments.

FIG. 4 corresponds to the head unit and the display device of FIG. 2. A detailed operation of the display device of FIGS. 2 to 4 will be described with reference to FIG. 4.

A turn-on signal ORing block ⓚ processes an ORing function for one or more types of turn-on signals (ACC/IGN1/IGN3...) generated from a vehicle and a turn-on signal (voltage generated from the DC voltage generator ⓐ and the PoC or filter ⓑ) of the head unit, so that the power of the display device is turned on even when only an arbitrary one turn-on signal is input. Even when all vehicle turn-on signals of the vehicle are OFF signals, the display device may be turned on by the MCU in the head unit. If an additional turn-on signal is needed, an input signal may increase by adding a diode to the ORing block.

A power-on reset part ⓙ converts a voltage obtained by through a turn-on signal ORing block ⓚ when the vehicle is turned on and the head unit desires to turn off the power of the display device.

Typically, since the display device is turned on when an enable signal input to the monitor power supply ⓜ is High and is turned off when the enable signal is Low, the enable signal becomes Low when the power-on reset part is activated. When the power-on reset part is activated and thus the monitor power supply is turned off, power is not supplied to the interior of the display device. In other words, a power-on reset function that may be used in a scenario in which the power is re-applied to the display device by turning off the power of the display device may be performed.

A voltage level detector ⓘ is a block that detects a voltage level when different DC voltages are received through a coaxial cable from the head unit and operates at a specific voltage or higher. For example, if a voltage level of 8 V or higher is detected, the power-on reset part ⓙ may be activated under a corresponding condition.

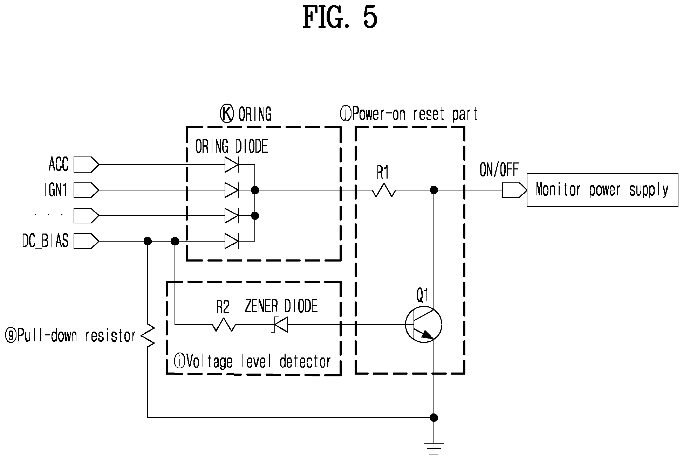

FIG. 5 illustrates the head unit and the display device according to embodiments.

FIG. 5 illustrates the configuration of the power-on reset part ⓙ, the turn-on signal ORing block ⓚ, and the voltage level detector ⓘ described in FIG. 4. A Zener diode is turned on when a voltage equal to or higher than a certain voltage is applied, and a resistor R2 protects overcurrent flowing into the Zener diode. When the certain voltage or higher is applied, a transistor Q1 is turned on, the monitor power supply becomes Low and all internal power of the display device is turned off. When the transistor Q1 is turned on, the turn-on current of the transistor Q1 is limited by a resistor R1.

When two or more voltages need to be controlled, a necessary logic may be configured by adding DC-bias voltage level application and recognition.

In a vehicle power input ORing circuit ⓝ and the monitor power supply ⓜ, vehicle power may be input as various types such as BATT/IGN1/IGN3. If there is more than one type of input power, ORing processing is required. The power supply also needs to consider boost power of a boost converter type for a low-voltage operation.

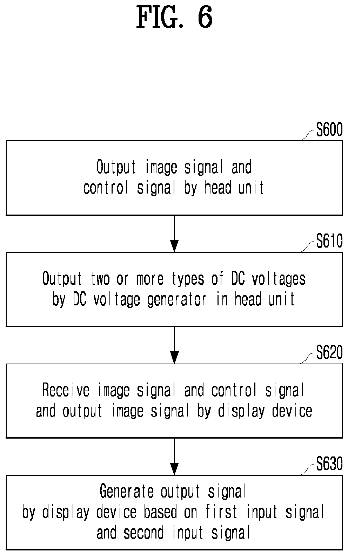

FIG. 6 illustrates a display control method according to embodiments.

The display control apparatus of FIGS. 1 to 5 may perform the control method as illustrated in FIG. 6.

The display control method according to embodiments may include step S600 of outputting an image signal and a control signal by the head unit.

The display control method according to embodiments may further include step S610 of outputting two or more types of DC voltages by the DC voltage generator in the head unit.

Although not illustrated in FIG. 6, the display control method according to embodiments may further include a step of monitoring a DC output voltage.

The display control method according to embodiments may further include step S620 of receiving an image signal and a control signal and outputting the image signal by the display device.

The display control method according to embodiments may further include step S630 of generating an output signal by the display device based on a first input signal and a second input signal.

In addition, the display control method according to embodiments may further include a step of receiving a vehicle signal by the MCU in the head unit, a step of monitoring a DC voltage, and a step of transmitting a signal for controlling a level of the DC voltage to the DC voltage generator by the MCU.

Here, the first input signal is or includes a vehicle signal of two or more types, the second input signal is or includes a voltage signal by the DC voltage generator of the head unit, and

Step S630 of generating the output signal based on the first input signal and the second input signal may include receiving the first input signal and the second input signal, and outputting a signal for activating the display device as an ON state when at least one of the first input signal or the second input signal is activated as an ON state.

The display control method according to embodiments may further include a step of resetting the power of the display device by converting the voltage of an output signal by the circuit when a voltage level of the second input signal is equal to or higher than a threshold value by the power-on reset part in the display device.

Referring to FIGS. 1 to 5, the display control apparatus may include a head unit that outputs an image signal and a control signal, and a display device that receives the image signal and the control signal and outputs the image signal. The head unit may include a DC voltage generator that outputs at least two types of DC voltages, and the display device may include a circuit that generates an output signal based on a first input signal and a second input signal. Here, the circuit may be an OR logic circuit.

The head unit further includes an MCU that receives a vehicle signal and a voltage detector that monitors the DC voltages, and the MCU may transmit a signal for controlling levels of the DC voltages to the DC voltage generator.

The first input signal may be two or more types of vehicle signals, the second input signal may be a voltage signal by the DC voltage generator of the head unit, and the circuit may receive the first input signal and the second input signal and output a signal for activating the display device as an ON state when at least one of the first input signal or the second input signal is activated as an ON state.

The display device may include a power-on reset part, and the power-on reset part may reset power of the display device by converting a voltage of the output signal by the circuit when a level of a voltage of the second input signal is equal to or greater than a threshold.

The head unit may transmit a signal obtained by overlapping the image signal, the control signal, and a voltage signal by the DC voltage generator with each other to the display device.

The display device may include a monitor power supply that receives vehicle power. Power of the display device may be activated when at least one of a voltage signal output by the DC voltage generator of the head unit or a voltage signal of a vehicle signal received by the display device is a turned-on signal and may be reset without sensing a value of the voltage signal of the vehicle signal when a level of the voltage signal output by the DC voltage generator is equal to or greater than a threshold.

The method and apparatus according to the above-described embodiments provide the following technical effects.

There is an effect of improving system safety. That is, when the head unit fails, the display device may provide a safety state not a black screen.

There is an effect of improving quality. When a quality problem occurs in which a screen is displayed as black, it is easy to determine which controller (or device) is the problem. That is, there is an effect of intuitive failure analysis and reduced AS costs.

There is a cost saving effect. Without a load switch power supply block based on the head unit, there is a cost saving effect of approximately 7.8 billion Won, for example, when there are 13 million blocks based on 600 Won per block. There are also additional advantages, such as indirect material cost saving, such as eliminating battery input end passive components and connector pins.

The embodiments have been described in terms of a method and/or a device, and the description of the method and the description of the device may be applied complementary to each other.

Although the accompanying drawings have been described separately for simplicity, it is possible to design new embodiments by combining the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications can be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In the present disclosure, "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to perform the related operation or interpret the related definition according to a specific condition when the specific condition is satisfied.

Operations according to the embodiments described in this specification may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory.

The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts and/or data) for the processes according to the embodiments, and a processor configured to control the operations of the transmission/reception device.

The processor may be referred to as a controller or the like, and may correspond to, for example, hardware, software, and/or a combination thereof.

## Claims

1. A display control apparatus, comprising
a head unit configured to output an image signal and a control signal; and
a display device configured to receive the image signal and the control signal and output the image signal,
wherein the head unit includes a direct current (DC) voltage generator configured to output at least two types of DC voltages, and
wherein the display device includes a circuit configured to generate an output signal based on a first input signal and a second input signal.

2. The display control apparatus of claim 1, wherein the head unit further includes:
a microcontroller unit (MCU) configured to receive a vehicle signal, and
a voltage detector configured to monitor the DC voltages, and
wherein the MCU is configured to transmit a signal for controlling levels of the DC voltages to the DC voltage generator.

3. The display control apparatus of claim 1 or 2, wherein:
the first input signal comprises at least two types of vehicle signals,
the second input signal comprises a voltage signal by the DC voltage generator, and
the circuit is configured to receive the first input signal and the second input signal and output a signal for activating the display device as an ON state when at least one of the first input signal or the second input signal is activated as ON state.

4. The display control apparatus of any one of claims 1 to 3, wherein the display device further includes a power-on reset part configured to reset power of the display device by converting a voltage of the output signal by the circuit when a level of a voltage of the second input signal is equal to or greater than a threshold.

5. The display control apparatus of any one of claims 1 to 4, wherein the head unit is configured to transmit a signal obtained by overlapping the image signal, the control signal, and a voltage signal by the DC voltage generator with each other to the display device.

6. The display control apparatus of any one of claims 2 to 5, wherein:
the head unit and the display device are connected by a coaxial cable, and
the voltage detector is configured to:
monitor a state of a connection between the head unit and the display device,
detect a voltage having a same value as a value of a DC voltage when the head unit and the display device are disconnected, and
detect a voltage of a smaller value than a value of a DC voltage generated by a resistor in the display device when the head unit and the display device are connected without an error.

7. The display control apparatus of any one of claims 1 to 6, wherein:
the display device includes a monitor power supply configured to receive vehicle power,
power of the display device is activated when at least one of a voltage signal output by the DC voltage generator of the head unit or a voltage signal of a vehicle signal received by the display device is a turned-on signal, and
the power of the display device is reset without sensing a value of the voltage signal of the vehicle signal when a level of the voltage signal output by the DC voltage generator is equal to or greater than a threshold.

8. A method of operating a display control apparatus comprising (1) a head unit including a direct current (DC) voltage generator and (2) display device, the method comprising
outputting, by the head unit, an image signal and a control signal;
outputting, by the DC voltage generator, at least two types of DC voltages;
receiving, by the display device, the image signal and the control signal and outputting the image signal; and
generating, by the display device, an output signal based on a first input signal and a second input signal.

9. The method of claim 8, wherein:
the head unit further includes microcontroller unit (MCU), and
the method further comprises:
receiving, by the MCU, a vehicle signal;
monitoring the DC voltages; and
transmitting, by the MCU, a signal for controlling levels of the DC voltages to the DC voltage generator.

10. The method of claim 8 or 9, wherein:
the first input signal comprises at least two types of vehicle signals,
the second input signal comprises a voltage signal by the DC voltage generator, and
generating the output signal based on the first input signal and the second input signal includes receiving the first input signal and the second input signal and outputting a signal for activating the display device as an ON state when at least one of the first input signal or the second input signal is activated as an ON state.

11. The method of any one of claims 8 to 10, wherein:
the display device comprises a power-on reset part and a circuit that is configured to generate the output signal, and
the method further comprises resetting, by the power-on reset part, power of the display device by converting a voltage of the output signal by the circuit when a level of a voltage of the second input signal is equal to or greater than a threshold.

12. The method of any one of claims 8 to 11, wherein:
the head unit and the display device are connected by a coaxial cable,
monitoring the DC voltages includes monitoring a state of a connection between the head unit and the display device, and
a voltage having a same value as a value of a DC voltage is detected when the head unit and the display device are disconnected, and a voltage of a smaller value than a value of a DC voltage generated by a resistor in the display device is detected when the head unit and the display device are connected without an error.
